# EUROPÄISCHE PATENTANMELDUNG

(11) **EP 1 128 690 A1**
(43) Veröffentlichungstag der Anmeldung: **29.08.2001**
(21) Anmeldenummer: 01101943.7
(22) Anmeldetag: 29.01.2001
(51) Int. Cl.: H04Q 7/32, G07C 5/00

(54) **Verfahren zum Betrieb eines in einem Fahrzeug eingebauten Funkgeräts und eines tragbaren Funktelefons**

(30) Priorität: 21.02.2000 DE 10007806
(71) Anmelder: BECKER GmbH, D-76307 Karlsbad (DE)
(72) Erfinder: Lappe, Dirk, 76228 Karlsruhe (DE)
(74) Vertreter: Patentanwälte Westphal, Mussgnug & Partner

(57) **Zusammenfassung**

Um einem Teilnehmer (T) den Betrieb eines tragbaren Funktelefons (H) und eines Funkgerätes (G) in einem Fahrzeug (K) zu erleichtern, sendet das Funkgerät (G) des Fahrzeuges (H) in einem begrenzten Sende- und Empfangsbereich eine Kennung für das tragbare Funktelefon (H) aus, das bei Empfang der Kennung seine Kenndaten an das Funkgerät (G) im Fahrzeug (K) sendet, um sich im Funkgerät (G) einzubuchen. Alternativ hierzu kann das tragbare Funktelefon (H) seine Kenndaten in einem begrenzten Sende- und Empfangsbereich aussenden, die vom Funkgerät (G) im Fahrzeug (K) empfangen werden. Auf diese Weise wird das tragbare Funktelefon (H) in das Funkgerät (G) des Fahrzeugs (K) eingebucht. Bei Anrufen von und zum tragbaren Funktelefon (H) dient das Funkgerät (G) des Fahrzeuges (K) jeweils als Schnittstelle.

## Beschreibung

Die Erfindung betrifft ein Verfahren zum Betrieb eines in einem Fahrzeug eingebauten Funkgerätes und eines tragbaren Funktelefons.

Zahlreichen Kraftfahrzeuge sind mit z. B. nach dem Global Standard for Mobile Communication - abgekürzt GSM - arbeitenden Funkgeräten ausgerüstet. Neben dem GSM-Funknetz gibt es weitere Funknetze für tragbare Funktelefone, sog. Handys. Um weitestgehend beim Telefonieren unabhängig zu sein, ist es sinnvoll, zusätzlich zu einem GSM-Funkgerät im Fahrzeug noch ein Handy mit sich zu führen.

Es ist daher Aufgabe der Erfindung, ein Verfahren zum Betrieb eines in einem Fahrzeug eingebauten Funkgerätes und eines tragbaren Funktelefons anzugeben.

Eine erste Lösung dieses Verfahrens sieht vor, dass das Funkgerät in einem begrenzten Sende- und Empfangsbereich eine Kennung für das tragbare Funktelefon aussendet, das bei Empfang der Kennung seine Kenndaten an das Funkgerät im Fahrzeug sendet, um sich im Funkgerät einzubuchen.

Eine zweite Lösung dieser Aufgabe sieht vor, dass das tragbare Funktelefon seine Kenndaten in einem begrenzten Sende- und Empfangsbereich aussendet, dass das im Fahrzeug eingebaute Funkgerät die Kenndaten empfängt und dass das tragbare Funktelefon in das Funkgerät eingebucht wird.

Wenn sich ein Teilnehmer mit seinem tragbaren Funktelefon innerhalb der zur Übertragung der Kenndaten begrenzten Reichweite aufhält, sendet entweder das tragbare Funkgerät seine Kenndaten an das Funkgerät im Fahrzeug oder das Funkgerät im Fahrzeug sendet eine Kennung für das tragbare Funktelefon aus. Bei Empfang der vom Funkgerät des Fahrzeuges ausgesendeten Kennung sendet das tragbare Funkgerät seine Kenndaten an das Funkgerät im Fahrzeug.

Bei beiden erfindungsgemäßen Verfahren wird das Funktelefon im Funkgerät des Fahrzeuges eingebucht. Wenn der Teilnehmer innerhalb der begrenzten Reichweite mit seinem tragbaren Funktelefon telefonieren möchte, wird nicht wie sonst üblich eine Funkverbindung vom tragbaren Funkgerät zu einer Funkstation des zugehörenden Telefonfunknetzes aufgebaut, sondern eine Funkverbindung zum zugehörenden Funkgerät im Fahrzeug. Das Funkgerät des Fahrzeuges baut nun eine Funkverbindung zum zugehörenden Mobilfunknetz auf.

Wird dagegen der Teilnehmer auf seinem tragbaren Funktelefon angerufen, so wird auf ähnliche Weise nicht das tragbare Funkgerät vom dazugehörenden Funknetz angerufen, sondern es wird vom Mobilfunknetz eine Funkverbindung zum Funkgerät im Fahrzeug aufgebaut, das den Ruf an das tragbare Funktelefon weiterleitet. Sowohl bei ankommenden als auch bei abgehenden Rufen stellt das Funktelefon den Handapparat des Funkgerätes im Fahrzeug dar.

Ein Ausführungsbeispiel der Erfindung sieht vor, dass ein Abgleich der Telefondatenbanken des tragbaren Funktelefons und des Funkgerätes im Fahrzeug durchgeführt wird.

Eine Ausgestaltung des erfindungsgemäßen Verfahrens sieht vor, dass die Sendung und der Empfang der Kenndaten nach dem sog. Bluetooth-Standard mit einer Trägerfrequenz von 2,4 GHz und mit einer begrenzten Reichweite erfolgt.

Besonders vorteilhaft ist es, im Fahrzeug ein Funkgerät gemäß dem Global Standard for Mobile Communication, ein sog. GSM-Funkgerät, vorzusehen.

Eine weitere Ausgestaltung des erfindungsgemäßen Verfahrens sieht vor, sowohl für das tragbare Funktelefon als auch für das Funkgerät im Fahrzeug Geräte vorzusehen, die für den Betrieb mit einer sog. SIM-Karte geeignet sind. Eine SIM-Karte ist eine Karte zur Teilnehmeridentifikation. Sie kann in ein tragbares Funktelefon oder in ein Mobilfunkgerät eingesteckt werden. Das Funktelefon oder das Mobilfunkgerät mit eingesteckter SIM-Karte ist nun als Gerät des SIM-Karteninhabers definiert. Anrufe für diesen Teilnehmer werden daher von diesem Gerät angenommen. Bei ausgehenden Rufen werden die Gebühren dem Teilnehmer mit der in das Gerät eingesteckten SIM-Karte auferlegt.

Vorzugsweise ist das Funkgerät im Fahrzeug an einen ringförmigen Datenbus angeschlossen, an den Datenquellen und Datensenken sowie eine Steuereinheit angeschlossen sind. Die Steuererinheit steuert die Funktionen des Funkgerätes.

Anhand der Figuren wird das erfindungsgemäße Verfahren beschrieben und erläutert.

In der Zeichnung zeigen:
- Fig. 1: ein Fahrzeug sowie den Teilnehmer des Fahrzeuges mit einem tragbaren Funktelefon und
- Fig. 2: einen ringförmigen Datenbus mit Datenquellen, Datensenken, einer Steuereinheit und einem Funkgerät.

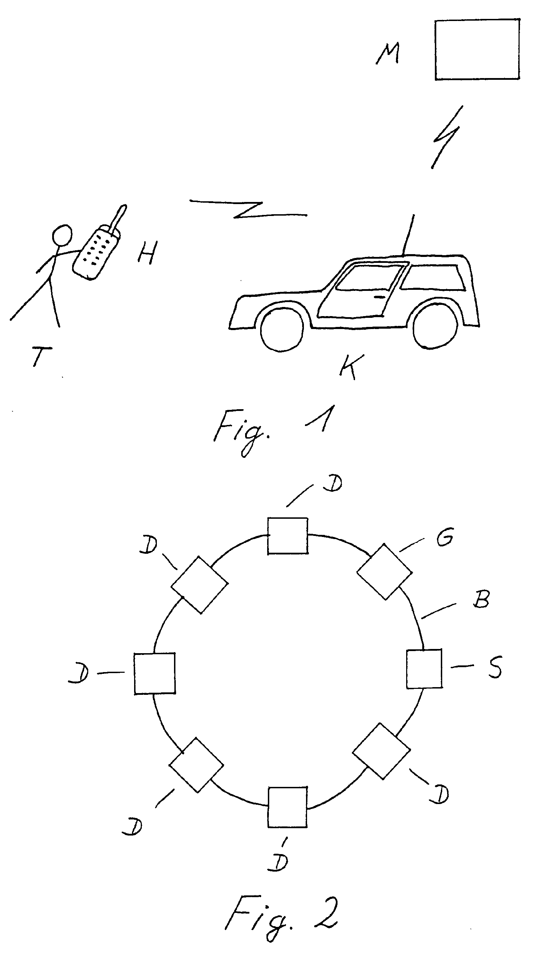

In der Fig. 1 sind ein Teilnehmer T, der ein tragbares Funktelefon H mit sich führt, sowie sein Fahrzeug K gezeigt. Der Teilnehmer T befindet sich innerhalb des begrenzten Sende- und Empfangsbereiches, der vorzugsweise nach dem Bluetooth-Standard bestimmt ist. Ein wesentlicher Vorteil der beiden erfindungsgemäßen Verfahren liegt darin, dass Funkverbindungen von und zum tragbaren Funktelefon nicht unmittelbar zwischen dem tragbaren Funktelefon H und dem zugehörenden Funknetz aufgebaut werden, sondern dass das Funkgerät des Fahrzeuges als Schnittstelle vorgesehen ist. Es wird daher stets eine Funkverbindung zwischen den Funkgerät des Fahrzeuges K und dem tragbaren Funktelefon H aufgebaut. Zwischen dem als Schnittstelle dienenden Funkgerät im Fahrzeug K und dem zugehörenden-Funknetz M wird ebenfalls eine Funkverbindung aufgebaut. Der Teilnehmer T kann deshalb über sein tragbares Funktelefon H mit dem Funkgerät im Fahrzeug K als Schnittstelle jeden beliebigen Teilnehmer rufen. In umgekehrter Richtung kann jeder beliebige Teilnehmer das Funktelefon H des Teilnehmers T anrufen, wobei das Funkgerät im Fahrzeug K ebenfalls als Schnittstelle liegt.

In der Fig. 2 ist eine in ein Fahrzeug eingebaute Kommunikationsanlage dargestellt.

An einen ringförmigen Datenbus B sind mehrere Datenquellen und Datensenken D, das Funkgerät G sowie eine Steuereinheit S angeschlossen. Die Datenquellen und Datensenken G können z. B. Rundfunkempfangsgeräte, Fernsehempfangsgeräte, Kassettenrekorder, CD-Spieler, DVD-Spieler und Wiedergabeeinheiten wie z. B. Bilschirm oder Lautsprecher sein. Die Steuereinheit S steuert alle an den ringförmigen Datenbus B angeschlossenen Geräte, auch das Funkgerät G.

Weil das tragbare Funktelefon als Handapparat für das Funkgerät im Fahrzeug dienen kann, wird kein zusätzlicher drahtloser oder drahtgebundener Hörer bzw. Handapparat mehr benötigt. Ein weiterer Vorteil der erfindungsgemäßen Verfahren liegt darin, dass die SIM-Karten des tragbaren Funktelefons und des in das Fahrzeug eingebauten Funkgerätes abgeglichen werden können.

### Bezugszeichenliste

- B: ringförmiger Datenbus
- D: Datenquelle, Datensenke
- G: Funkgerät
- H: tragbares Funktelefon
- K: Fahrzeug
- M: Mobilfunknetz
- s: Steuereinheit
- T: Teilnehmer

## Patentansprüche

1. Verfahren zum Betrieb eines in einem Fahrzeug (K) eingebauten Funkgerätes (G) und eines tragbaren Funktelefons (H),
**dadurch gekennzeichnet,**
dass das Funkgerät (G) des Fahrzeuges (K) in einem begrenzten Sende- und Empfangsbereich eine Kennung für das tragbare Funktelefon (H) aussendet, das bei Empfang dieser Kennung seine Kenndaten an das Funkgerät (G) im Fahrzeug (K) sendet, um sich im Funkgerät (G) des Fahrzeugs (K) einzubuchen.

2. Verfahren zum Betrieb eines in einem Fahrzeug (K) eingebauten Funkgerätes (G) und eines tragbaren Funktelefons (H),
**dadurch gekennzeichnet,**
dass das tragbare Funktelefon (H) seine Kenndaten in einem begrenzten Sende- und Empfangsbereich aussendet, dass das im Fahrzeug (K) eingebaute Funkgerät (G) diese Kenndaten empfängt und dass das tragbare Funktelefon (H) in das Funkgerät (G) des Fahrzeugs (K) eingebucht wird.

3. Verfahren nach Anspruch 1 oder 2,
**dadurch gekennzeichnet**,
dass ein Abgleich der Telefondatenbanken des tragbaren Funktelefons (H) und des Funkgerätes (G) des Fahrzeuges (K) durchgeführt wird.

4. Verfahren nach Anspruch 1, 2 oder 3,
**dadurch gekennzeichnet**,
dass die Sendung und der Empfang der Kenndaten des tragbaren Funktelefons (H) nach dem sog. Bluetooth-Standard mit einer Trägerfrequenz 2,4 GHz erfolgt.

5. Verfahren nach Anspruch 1, 2, 3 oder 4,
**dadurch gekennzeichnet**,
dass für das Funkgerät (G) im Fahrzeug (K) ein GSM-Mobilfunkgerät nach dem Global Standard for Mobile Communication vorgesehen ist.

6. Verfahren nach einem der vorangehenden Ansprüche,
**dadurch gekennzeichnet**,
dass das tragbare Funktelefon (H) und das Funkgerät (G) im Fahrzeug (K) für den Betrieb mit einer sog. SIM-Karte geeignet sind.

7. Verfahren nach Anspruch 6,
**dadurch gekennzeichnet,**
dass die SIM-Karten des tragbaren Funktelefons (H) und des Funkgerätes (G) im Fahrzeug (K) abgeglichen werden.

8. Verfahren nach einem der Ansprüche 1 bis 7,
**dadurch gekennzeichnet**,
dass für eine Funkverbindung von und zum tragbaren Funktelefon (H) das Funkgerät (G) im Fahrzeug (K) als Schnittstelle dient, von der aus eine Funkverbindung zum Mobilfunknetz (M) besteht.

9. Verfahren nach einem der vorangehenden Ansprüche,
**dadurch gekennzeichnet**,
dass das Funkgerät (G) im Fahrzeug (K) an einen ringförmigen Datenbus (B) angeschlossen ist, an den Datenquellen, Datensenken (D) und eine Steuereinheit (S) angeschlossen sind, und dass die Steuereinheit (S) das Funkgerät (G) steuert.
